# EUROPEAN PATENT APPLICATION

(11) **EP 3 998 419 A1**
(43) Date of publication of application: **18.05.2022**
(21) Application number: 20837387.8
(22) Date of filing: 22.05.2020
(51) Int. Cl.: F16K 11/074

(54) **ROCKER-ARM-TYPE GRADED FAUCET AND VALVE ELEMENT THEREOF**

(30) Priority: 09.07.2019 CN 201910613637
(71) Applicant: Li, Liangqing, Nanshan District Shenzhen Guangdong 518063 (CN); Wang, Xiaobing, Futian District Shenzhen Guangdong 528028 (CN)
(72) Inventor: Li, Liangqing, Nanshan District Shenzhen Guangdong 518063 (CN); Wang, Xiaobing, Futian District Shenzhen Guangdong 528028 (CN)
(74) Representative: Luchs, Willi
(86) International application number: PCT/CN2020/091862
(87) International publication number: WO 2021/004173

(57) **Abstract**

Disclosed are a rocker-arm-type graded faucet and a valve element thereof, the valve element comprising : a lower valve body (10); an upper valve body (20); a fixed seat (30) arranged to be non-translatable and has an unchanged distance relative to the lower valve body (10); a rocker arm (40) having a free end and a connection end and pivotally connected to the fixed seat (30), wherein the connection end of the rocker arm (40) is connected to the upper valve body (20), such that when the rocker arm (40) vertically swings relative to the fixed seat (30), the connection end of the rocker arm (40) drives the upper valve body (20) to translate back and forth relative to the lower valve body (10); a first stop matching portion arranged at the side of the fixed seat (30); and a stop matching portion I arranged at the side of the rocker arm (40), wherein when the rocker arm (40) vertically swings relative to the fixed seat (30), the stop matching portion I can cooperate with the first stop matching portion to enable the rocker arm (40) to temporarily stay at a first specific swing angular position relative to the fixed seat (30). The improved valve element is provided, such that a rocker-arm-type faucet capable of conveniently sensing and controlling the opening degree is provided, and the graded rocking-type faucet has a simple structure and a low manufacturing cost, and extremely conveniently achieves water conservation.

## Description

The present application claims the priority of Chinese invention patent application No. 201910613637.0 filed on July 9, 2019 and entitled "Stepwise Swing Arm Type Faucet and Valve Assembly Thereof'.

### Technical Field

The invention generally relates to a faucet, and in particular to a valve assembly of a swing arm type faucet.

### Background Art

Swing arm type faucets have been widely used; however, the opening degrees of such existing faucets usually cannot be readily controlled, which results in inconvenient use as well as waste of water resources.

### Summary of Invention

It is an object of the present invention to provide a faucet which can readily provide different opening degrees.

According to a first aspect of the present invention, there is provided a valve assembly for a faucet, which comprises:
a lower valve body having an upper face and a lower face, the lower valve body is provided with an inlet and an outlet respectively running through from the upper face to the lower face thereof;
an upper valve body having an upper face and a lower face provided with a recess thereon, wherein the lower face of the upper valve body forms a sealing fit with the upper face of the lower valve body, and the upper valve body is capable of back and forth translation with respect to the lower valve body such that when the recess of the upper valve body overlaps with both of the inlet and the outlet of the lower valve body, a corresponding water flow path is established by all of the inlet, the recess and the outlet, and when the recess of the upper valve body does not overlap with both of the inlet and the outlet of the lower valve body, said water flow path is cut off accordingly;
a fixed seat configured to be non-translatable and invariable in distance with respect to the lower valve body;
a swing arm having a free end and a connecting end and being pivotally connected to the fixed seat, wherein the connecting end of the swing arm is connected to the upper face of the upper valve body, such that when the swing arm swings up and down with respect to the fixed seat, the connecting end of the swing arm drives the upper valve body to translate back and forth with respect to the lower valve body;
a first stop engaging element provided on the fixed seat; and
a first stop engaging element provided on the swing arm, wherein when the swing arm swings up and down with respect to the fixed seat, the first stop engaging element of the fixed seat is capable of engaging with the first stop engaging element of the swing arm so as to hold the swing arm temporarily at a first given swing angular position with respect to the fixed seat (once an external swing force is further applied, the swing arm would swing or pivot out of the angle position).

It will be appreciated by those skilled in the art that orientational expressions "up, down, left, right, forth, back" and the like in the present invention are only for the purpose of clear description, such as to facilitate the understanding of the present invention in connection with the embodiments shown in the drawings, and are not for any limiting purpose.

According to the present invention, the first stop engaging element of the fixed seat may be one of a protrusion and a notch (disposed in the swing path of the swing arm), and the first stop engaging element of the swing arm may be the other of the protrusion and the notch (for example, disposed on the side of the swing arm which is parallel to the swing plane).

According to a particular embodiment of the present invention, at least one of the first stop engaging element of the fixed seat and the first stop engaging element of the swing arm may be a resilient part such as a plastic part.

According to another particular embodiment of the present invention, one of the first stop engaging element of the fixed seat and the first stop engaging element of the swing arm may be a spring-loaded ball, and the other of the first stop engaging element of the fixed seat and the first stop engaging element of the swing arm may be a semicircle orifice matching in shape with the ball.

The valve assembly for a faucet according to the present invention may further comprise:
a second stop engaging element provided on the fixed seat; and
a second stop engaging element provided on the swing arm, when the swing arm swings up and down with respect to the fixed seat, the second stop engaging element of the fixed seat is capable of engaging with the second stop engaging element of the swing arm so as to hold the swing arm temporarily at a second given swing angular position with respect to the fixed seat, wherein the second given swing angular position is different from the first given swing angular position.

According to a preferred embodiment of the present invention, the first stop engaging element is provided on one side of the fixed seat, while the second stop engaging element is provided on the other side of the fixed seat; and the first stop engaging element is provided on one side of the swing arm, while the second stop engaging element is provided on the other side of the swing arm. Such a structure skillfully avoids mating interference, and achieves two graded partial opening degrees in a simple way.

According to the present invention, the minimum swing angular position (initial low position) of the swing arm with respect to the fixed seat may correspond to a zero opening degree of the faucet, the first given swing angular position may correspond to an opening degree of about 20%, the second given swing angular position may correspond to an opening degree of about 50%, and the maximum swing angular position (highest position) of the swing arm with respect to the fixed seat may correspond to a full opening degree of the faucet. Of course, the first given swing angular position and the second given swing angular position may also correspond to other suitable opening degrees.

According to the valve assembly of faucet according to the present invention, the lower valve body may be provided with two separate inlets and one common outlet, and the fixed seat may further be configured to be rotatable with respect to the lower valve body, but non-rotatable with respect to the upper valve body, such that when the swing arm swings left and right, the upper valve body is thus driven to rotate left and right with respect to the lower valve body (such that the water flow path may be establish by different inlets with the outlet via the recess). Of course, it is also possible in this case to add a rotation stopper to control the water inflow at different inlets, for example to add a left limit stopper and a right limit stopper such that the left inlet or the right inlet can be in a fully open or fully closed state thereby.

For the valve assembly of faucet according to the present invention, both of the upper valve body and the lower valve body may be made of ceramic, and the connecting end of the swing arm may be connected to the upper face of the upper valve body through a plastic connector.

The valve assembly of faucet according to the present invention may further comprise a sealing connector having an upper face and a lower face and being provided with an inlet ring seal and an outlet ring seal respectively running through from the upper face to the lower face thereof, wherein the upper face of the sealing connector abuts against the lower face of the lower valve body, such that the inlet ring seal is aligned with the inlet of the lower valve body and the outlet ring seal is aligned with the outlet of the lower valve body.

According to another aspect of the present invention, there is also provided a faucet, which comprises:
a faucet housing for mounting on a water pipe, having a cylinder body and a spout protruding laterally from the cylinder body, wherein the cylinder body is divided into an upper chamber and a lower chamber by a partition having an upper face and a lower face, the lower chamber is mounted on the water pipe, the partition has an inlet running through from the upper face to the lower face thereof and an outlet blind hole formed on the upper face thereof, and the outlet blind hole is in direct communication with the spout;
the valve assembly for a faucet as mentioned above, mounted in the upper chamber of the faucet housing, wherein the lower valve body is mounted to be stationary with respect to the faucet housing, and the lower face of the sealing connector abuts against the partition in the cylinder body of the faucet housing, such that the inlet ring seal of the sealing connector is aligned with the inlet of the partition, and the outlet ring seal is aligned with the outlet blind hole of the partition; and
a handle cover, which is sealingly mounted on the upper chamber of the faucet housing and fixedly connected to the free end of the swing arm, such that when the handle cover swings the swing arm is thus driven to swing accordingly.

By providing the improved valve assembly, a swing arm type faucet which can readily control the opening degrees in a tactile manner is provided. Such a stepwise swing type faucet has the advantages of simple structure and low manufacturing cost, and it is extremely convenient for saving water.

### Brief Description of Drawings

Fig. 1 illustrates a schematic view of the structure of an embodiment of the valve assembly of the present invention, in which the fixed seat is removed to better show the internal structure;
Fig. 2 illustrates a schematic view of the structure of the lower valve body and the upper valve body;
Fig. 3 illustrates a schematic view of the structure of an alternative embodiment of the valve assembly of the present invention;
Fig. 4 and Fig. 5 illustrate schematic views of the structure of the faucet housing in different directions, respectively; and
Fig. 6 illustrates an exploded schematic view of the faucet of the present invention.

### Detailed Description

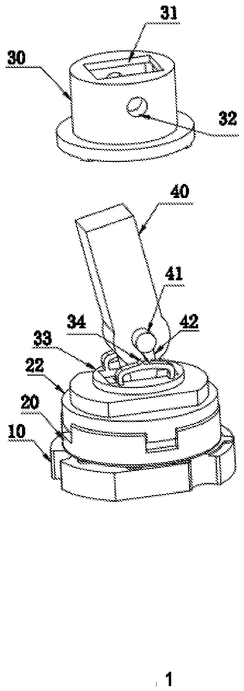

Fig. 1 illustrates an embodiment of the valve assembly for a faucet of the present invention. As shown, the valve assembly for a faucet generally comprises: a lower valve body 10, an upper valve body 20, a fixed seat 30 and a swing arm 40.

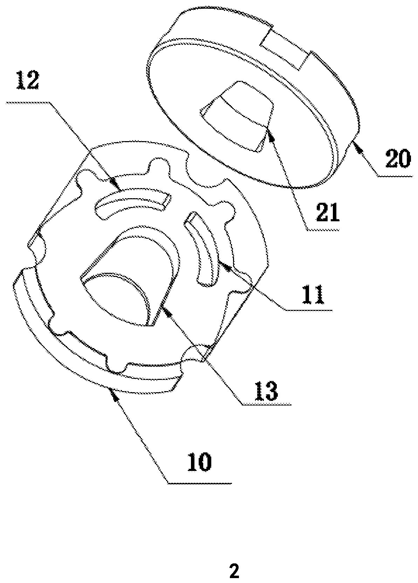

As shown in Fig. 2, the lower valve body 10 is generally flat, made of ceramic material, and provided with two inlets 11, 12 and an outlet 13 running through from the upper face to the lower face thereof. The inlet 11 and the inlet 12 may be inlets for hot water and cold water, respectively.

The upper valve body 20 is also generally flat and made of ceramic material, and the lower face thereof is provided with an elongated recess 21. The upper valve body 20 is assembled on the lower valve body 10, and the lower face of the upper valve body 20 forms a watertight fit with the upper face of the lower valve body 10, and is capable of moving smoothly thereon. The recess 21 is designed to connect or communicate the inlets 11, 12 with the outlet 13 of the lower valve body 10, as described below. Referring to Fig. 1, the upper face of the upper valve body 20 has a plastic connector 22 fixed thereon.

Referring back to Fig. 1, the fixed seat 30 is generally cylindrical, with a through hole 31 running through from top to bottom, and the side wall thereof is formed with two mounting holes 32 symmetrically located at the same horizontal height.

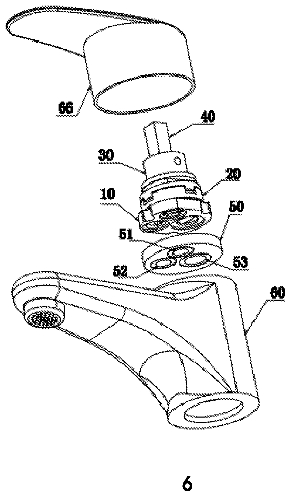

The swing arm 40 is provided with a pivot shaft 41 in its lateral direction. When assembled, the swing arm 40 is inserted through the through hole 31 of the fixed seat 30, with the pivot shaft 41 being inserted into the mounting hole 32s. The free end or swing end of the swing arm 40 protrudes upwardly out of the through hole 31, and is connected to a handle cover 66 (as shown in Fig. 6) which will be mentioned hereinafter; and the connecting end or fixed end protrudes downwardly out of the through hole 31 to connect the connector 22.

The swing arm 40 shown in Fig. 1 is made of plastic, and also has receiving indentations or V-shaped catching notches 42 integrally formed thereon. Also mounted within the fixed seat 30 is stop means 33 which is formed with a protrusion or inverted V-shaped block 34. Of course, the block 34 may also be integrally formed inside the through hole 31 of the fixed seat 30. Although only one catching notch 42 and one block 34 can be seen in Fig. 1, another catching notch is also asymmetrically formed on the other side of the swing arm, and another corresponding block is also asymmetrically formed on another stop means. In this way, as the swing arm 40 swings or pivots with respect to the fixed seat 30, it can temporarily stay at two different given swing angular positions or pivot positions as needed, corresponding respectively to two partial opening degrees of the faucet.

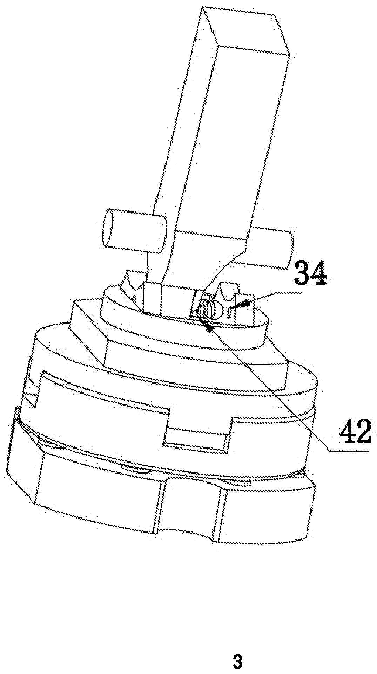

Fig. 3 illustrates an alternative embodiment of the valve assembly for a faucet of the present invention, the overall structure of which is similar to that of Fig. 1, except that a spring-loaded ball 42' is provided on the swing arm 40 in place of the catching notch 42, and a round hole 34' is formed on the stop means 33 in place of the block 34.

Fig. 6 also illustrates a disc-shaped sealing connector 50, provided with two water inlet ring seals 51, 52 and an outlet ring seal 53 respectively running through from the upper face to the lower face thereof. When assembled, the upper face of the sealing connector 50 abuts against the lower face of the lower valve body 10, the inlet ring seals 51, 52 are aligned respectively with the inlets 11, 12 of the lower valve body 10, and the outlet ring seal 53 is aligned with the outlet 13 of the lower valve body 10.

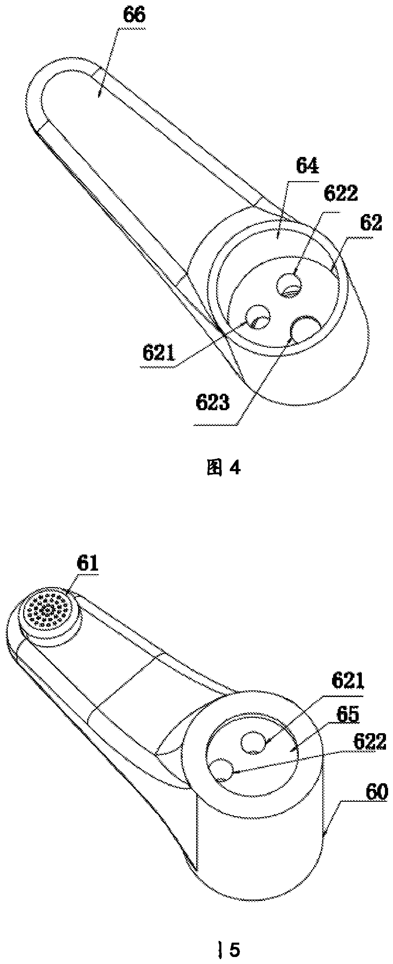

Fig. 4 and 5 illustrate a faucet housing incorporating the valve assembly of the present invention, respectively, which has a metal cylinder body 60 and a spout 61 protruding laterally from the cylinder body. The cylinder body 60 is divided into an upper chamber 64 and a lower chamber 65 by a partition 62. In use, the lower chamber 65 is mounted on a water supply pipe (not illustrated). The partition 62 has inlets 621, 622 running through from the upper face to the lower face thereof and an outlet blind hole 623 formed on the upper face thereof, wherein the outlet blind hole 623 is in direct communication with the spout 61. The illustrated faucet also has a handle cover 66 sealingly mounted on the upper chamber 64 of the faucet housing.

As shown in Fig. 6, the valve assembly for a faucet of the present invention is assembled in the upper chamber 64 of the faucet housing, the lower valve body 10 is mounted to be stationary with respect to the faucet housing, and the lower face of the sealing connector 50 abuts against the partition 62 in the cylinder body 60 of the faucet housing, with the inlet ring seals 51, 52 of the sealing connector 50 being aligned respectively with the inlets of the partition 62, and the outlet ring seal 53 being aligned with the outlet blind hole 623 of the partition 62. The free end of the swing arm 40 is fixedly connected to the handle cover 66. The fixed seat 30 is mounted to be rotatable with respect to the lower valve body 10, but non-rotatable with respect to the upper valve body 20, such that when the swing arm 40 swings left or right, the upper valve body 20 is thus driven to rotate left or right correspondingly with respect to the lower valve body 10 so as to select an inlet 11 or 12 to establish with the outlet 13 a corresponding water flow path through the recess 21. Additionally, rotation stoppers may also be provided to limit the left and right maximum rotation degrees corresponding to the case where one water inlet is fully opened and the other is fully closed.

For the faucet according to the present invention, the minimum swing angular position (initial low position) and the maximum swing angular position (highest position) of the swing arm 40 with respect to the fixed seat 30 can be determined by the two (front and rear) edges of the through hole 31 of the fixed seat 30. Thus, the faucet of the present invention will have four opening degrees controllable in a tactile manner: a zero opening degree corresponding to the minimum swing angle; a first partial opening degree, for example 20%, corresponding to a first given swing angular position; a second partial opening degree, for example 50%, corresponding to a second given swing angular position; and a full opening degree corresponding to the maximum swing angular position (highest position). Of course, the first given swing angular position and the second given swing angular position may also be set to correspond to other suitable opening degrees.

It will be appreciated by those skilled in the art that the above illustrated embodiments are only for better understanding of the present invention rather than for any limiting purpose. For example, although two water inlets are illustrated, it is also possible to provide only one water inlet, while dispensing with the rotational arrangement of the fixed seat with respect to the lower valve body.

## Claims

1. A valve assembly for a faucet, comprising:
a lower valve body having an upper face and a lower face, the lower valve body is provided with an inlet and an outlet respectively running through from the upper face to the lower face thereof;
an upper valve body having an upper face and a lower face with a recess provided thereon, wherein the lower face of the upper valve body forms a sealing fit with the upper face of the lower valve body, and the upper valve body is capable of back and forth translation with respect to the lower valve body such that when the recess of the upper valve body overlaps with both of the inlet and the outlet of the lower valve body, a corresponding water flow path is established by all of the inlet, the recess and the outlet, and when the recess of the upper valve body does not overlap with both of the inlet and the outlet of the lower valve body, said water flow path is cut off accordingly;
a fixed seat configured to be non-translatable and invariable in distance with respect to the lower valve body;
a swing arm having a free end and a connecting end and being pivotally connected to the fixed seat, wherein the connecting end of the swing arm is connected to the upper face of the upper valve body, such that when the swing arm swings up and down with respect to the fixed seat, the connecting end of the swing arm drives the upper valve body to translate back and forth with respect to the lower valve body;
a first stop engaging element provided on the fixed seat; and
a first stop engaging element provided on the swing arm, wherein when the swing arm swings up and down with respect to the fixed seat, the first stop engaging element of the fixed seat is capable of engaging with the first stop engaging element of the swing arm so as to hold the swing arm temporarily at a first given swing angular position with respect to the fixed seat.

2. The valve assembly for a faucet according to claim 1, wherein the first stop engaging element of the fixed seat is one of a protrusion and a notch, and the first stop engaging element of the swing arm is the other of the protrusion and the notch.

3. The valve assembly for a faucet according to claim 2, wherein at least one of the first stop engaging element of the fixed seat and the first stop engaging element of the swing arm is a resilient part.

4. The valve assembly for a faucet according to claim 2, wherein one of the first stop engaging element of the fixed seat and the first stop engaging element of the swing arm is a spring-loaded ball, and the other of the first stop engaging element of the fixed seat and the first stop engaging element of the swing arm is a semicircle orifice matching in shape with the ball.

5. The valve assembly for a faucet according to claim 1, further comprising:
a second stop engaging element provided on the fixed seat; and
a second stop engaging element provided on the swing arm, when the swing arm swings up and down with respect to the fixed seat, the second stop engaging element of the fixed seat is capable of engaging with the second stop engaging element of the swing arm so as to hold the swing arm temporarily at a second given swing angular position with respect to the fixed seat, wherein the second given swing angular position is different from the first given swing angular position.

6. The valve assembly for a faucet according to claim 5, wherein the minimum swing angular position of the swing arm with respect to the fixed seat corresponds to a zero opening degree of the faucet, the first given swing angular position corresponds to an opening degree of about 20% of the faucet, the second given swing angular position corresponds to an opening degree of about 50% of the faucet, and the maximum swing angular position of the swing arm with respect to the fixed seat corresponds to a full opening degree of the faucet.

7. The valve assembly for a faucet according to claim 1, wherein the lower valve body is provided with two separate inlets and one common outlet, and the fixed seat is further configured to be rotatable with respect to the lower valve body, but non-rotatable with respect to the upper valve body, such that when the swing arm swings left and right, the upper valve body is thus driven to rotate left and right correspondingly with respect to the lower valve body.

8. The valve assembly for a faucet according to claim 1, wherein both of the upper valve body and the lower valve body are made of ceramic, and the connecting end of the swing arm is connected to the upper face of the upper valve body via a plastic connector.

9. The valve assembly for a faucet according to claim 8, further comprising a sealing connector having an upper face and a lower face and being provided with an inlet ring seal and an outlet ring seal respectively running through from the upper face to the lower face thereof, wherein the upper face of the sealing connector abuts against the lower face of the lower valve body, such that the inlet ring seal is aligned with the inlet of the lower valve body and the outlet ring seal is aligned with the outlet of the lower valve body.

10. A faucet, comprising:
a faucet housing for mounting on a water pipe, having a cylinder body and a spout protruding laterally from the cylinder body, wherein the cylinder body is divided into an upper chamber and a lower chamber by a partition having an upper face and a lower face, the lower chamber is mounted on the water pipe, the partition has an inlet running through from the upper face to the lower face thereof and an outlet blind hole formed on the upper face thereof, and the outlet blind hole is in direct communication with the spout;
the valve assembly for a faucet according to claim 9, mounted in the upper chamber of the faucet housing, wherein the lower valve body is mounted to be stationary with respect to the faucet housing, and the lower face of the sealing connector abuts against the partition in the cylinder body of the faucet housing, such that the inlet ring seal of the sealing connector is aligned with the inlet of the partition, and the outlet ring seat is aligned with the outlet blind hole of the partition; and
a handle cover, which is sealingly mounted on the upper chamber of the faucet housing and fixedly connected to the free end of the swing arm, such that when the handle cover swings the swing arm is thus driven to swing accordingly.
